# EUROPÄISCHE PATENTSCHRIFT

(11) **EP 0 531 913 B1**
(45) Veröffentlichungstag und Bekanntmachung des Hinweises auf die Patenterteilung: **04.12.1996**
(21) Anmeldenummer: 92115229.4
(22) Anmeldetag: 05.09.1992
(51) Int. Cl.: B60J 1/00

(54) **Kraftfahrzeug mit gepanzerter Scheibe**
Motor vehicle with armoured glass
Véhicule avec vitrage armé

(30) Priorität: 07.09.1991 DE 9111130 U; 23.04.1992 DE 9205520 U
(43) Veröffentlichungstag der Anmeldung: 17.03.1993
(73) Patentinhaber: TRASCO EXPORT GMBH, 28719 Bremen (DE)
(72) Erfinder: Meyer, Hugo, W-2803 Weyhe-Ahausen (DE); Naber, Sven, W-2833 Kirchseelte (DE)
(74) Vertreter: Eisenführ, Speiser & Partner

(56) Entgegenhaltungen:
- DE-A- 3 724 414
- DE-A- 4 006 709

## Beschreibung

Die Erfindung betrifft eine Kraftfahrzeug, dessen Innenraum mit gepanzerten Scheiben gegen Beschuß geschützt ist.

Für den Transport attentatsgefährdeter Personen werden seit langer Zeit gepanzerte Kraftfahrzeuge verwendet. Die Anforderungen an die Panzerung haben sich aufgrund der zunehmenden Durchschlagskraft der Geschosse ständig erhöht. Während eine ausreichende Panzerung der Karosserie relativ unproblematisch ist, treten bei der Panzerung der Fahrzeugscheiben mit entsprechend hoher Schußfestigkeit Probleme auf. Diese Probleme resultieren im wesentlichen aus zwei Forderungen: Zum einen ist man bestrebt, aus wirtschaftlichen Gründen Serienfahrzeuge nachträglich zu panzern, zum anderen sollte aber auch das gepanzerte Fahrzeug möglichst nicht als ein solches zu erkennen sein.

Aus der DE-C-36 39 781 ist ein Kraftfahrzeug mit gepanzerter Scheibe bekannt, die gegenüber einer äußeren Umfangsfläche des Kraftfahrzeuges in Richtung auf seinen Innenraum zurückgesetzt und mit dem Kraftfahrzeug verbunden ist. Die Erkennbarkeit gepanzerter Glasscheiben in Kraftfahrzeugtüren wird hierdurch wesentlich reduziert, weil die Scheiben entlang ihrer Kanten in Richtung auf den Innenraum derart angeschrägt sind, daß die Außenfläche jeder Scheibe einen größeren Umfang als deren innere Oberfläche aufweist. Die Scheiben konnten somit von außen dieselben Abmessungen wie ungepanzerte Scheiben aufweisen und gleichwohl eine hohe Beschußfestigkeit haben.

Die weitere Entwicklung der Fahrzeugtechnik, insbesondere im Hinblick auf eine wirksame Verringerung des Windwiderstandes führte zu Karosserieformen, deren Oberfläche in immer stärkerem Maße und zum Teil auch in mehreren Richtungen gekrümmt ist.

Da man nach wie vor bestrebt ist, Serienfahrzeuge nachträglich zu panzern und diese Panzerung möglichst nach außen nicht sichtbar werden zu lassen, müssen auch die Panzerglasscheiben nicht nur immer stärker gekrümmt sein, sondern sich auch flächenbündig in die äußere Kontur des Kraftfahrzeugs einfügen. Nun werden aber mit zunehmender Krümmung die Fertigungstoleranzen von Panzerglasscheiben immer größer, so daß sich gerade diese Flächenbündigkeit nicht mehr zuverlässig erreichen läßt. Die Ausschußquoten sind also recht groß geworden. Ferner wird auch die Herstellung von Panzerglasscheiben mit zunehmender Krümmung technologisch und damit wirtschaftlich immer aufwendiger.

Der Erfindung liegt deshalb die Aufgabe zugrunde, ein Kraftfahrzeug so mit einer Scheibenpanzerung zu versehen, daß diese sich mit wirtschaftlich vertretbarem Aufwand im wesentlichen flächenbündig in eine auch mit stärkeren Krümmungen versehene äußere Kontur des Kraftfahrzeuges einfügt und dadurch die Erkennbarkeit der Panzerung des Fahrzeuges gering hält.

Gelöst wird diese Aufgabe in der Weise, daß ein Kraftfahrzeug mit gepanzerter Scheibe, die gegenüber einer äußeren Umfangsfläche des Kraftfahrzeuges in Richtung auf seinen Innenraum zurückgesetzt und mit dem Kraftfahrzeug verbunden ist (Kraftfahrzeug, das jenem nach der DE-C-3639781 gattungsgemäß ausgebildet ist), dadurch gekennzeichnet ist, daß sie zusätzlich zu einer Panzerglasscheibe (PGS) (3,3') eine nicht oder nur wenig gepanzerte und auf der Fahrzeugaußenseite vor die Panzerglasscheibe gesetzte Ausgleichsscheibe, die im wesentlichen flächenbündig in die Außenhaut des Kraftfahrzeugs oder dessen Tür eingelassen ist und einer von der Kraftfahrzeugform vorgegebenen Kontur folgt, und Distanzelemente zum Ausgleich von Fertigungstoleranzen der Panzerglasscheibe und zur Befestigung der Ausgleichsscheibe an der diese tragenden Panzerglasscheibe aufweist.

Die Distanzelemente sind dabei vorzugsweise aus einer zwischen den Scheiben im wesentlichen an ihrem Umfang ganz oder teilweise umlaufenden Leiste, bevorzugt in Form einer runden Butylschnur mittlerer Härte und jeweils einer Klebstoffschicht zwischen Scheiben und Leiste gebildet.

Der Abstand zwischen beiden Scheiben kann dann durch die Schichtstärke des Klebstoffs fein eingestellt sein.

Die Leiste kann in einem Hohlraum Silica-Gel o. dgl. enthalten und eine Öffnung zumindest zu dem von beiden Scheiben eingeschlossenen Luftraum aufweisen sowie mit einer Dichtmasse gegen die Umgebungsluft abgedichtet sein. Das Silica-Gel entzieht in diesem Fall der von beiden Scheiben eingeschlossenen Luft die Feuchtigkeit, so daß ein Beschlagen der Scheiben von Innen verhindert wird.

Die Ausgleichsscheibe kann eine ESG-Scheibe (Einscheiben-Sicherheitsglas) sein und ganz oder teilweise einen größeren oder kleineren Umfang als die Panzerglasscheibe haben.

Es wird bevorzugt, daß das Maß des Umfangs der Ausgleichsscheibe vom Umfangsmaß der Panzerglasscheibe abweicht; in einer bevorzugten Ausführungsform ist die Ausgleichsscheibe größer als die Panzerglasscheibe und ist stärker gekrümmt als jene. Außerdem ist vorgesehen, daß das Außendichtprofil der Türen des Kraftfahrzeuges mindestens auf dessen Außenseite seine serienmäßigen Abmessungen aufweist.

Weitere Einzelheiten, Merkmale und Vorteile der Erfindung ergeben sich aus der nachfolgenden Beschreibung eines bevorzugten Ausführungsbeispiels anhand der Zeichnungen. In diesen zeigen:
- Fig. 1: einen vertikalverlaufenden Teilschnitt durch den oberen Bereich einer gepanzerten Scheibe eines Ausführungsbeispiels und
- Fig. 2: einen der Fig. 1 entsprechenden Teilschnitt durch eine Panzerglasscheibe eines anderen Ausführungsbeispiels.

Eine gepanzerte Scheibe 1 nach einem Ausführungsbeispiel setzt sich aus einer Ausgleichsscheibe 2 auf der Fahrzeugaußenseite und einer den eigentlichen Schutz bietenden Panzerglasscheibe 3 zusammen, die unmittelbar vom Fahrzeug getragen oder in einer Türkonstruktion befestigt ist. Die Panzerglasscheibe 3 ist in bekannter Weise aus mehreren Schichten aufgebaut und so bemessen, daß sie die geforderte Schußfestigkeit besitzt. Die Ausgleichsscheibe 2 kann ebenfalls leicht gepanzert sein. Bevorzugt besteht sie aber aus Einscheibensicherheitsglas (ESG). Vorrangig ist die Ausgleichsscheibe 2 so gefertigt, daß sie nicht nur flächenbündig in eine Außenhaut 8 des Kraftfahrzeuges eingelassen werden kann, sondern insbesondere auch einer von der Kraftfahrzeugform vorgegebenen Kontur folgt. Sie weist also eine der Umfangsformen des Kraftfahrzeuges folgende und diese fortsetzende Krümmung auf, die sehr stark sein kann. Die Krümmung kann dabei sowohl in einer horizontalen als auch in einer vertikalen Ebene oder in beiden Ebenen verlaufen.

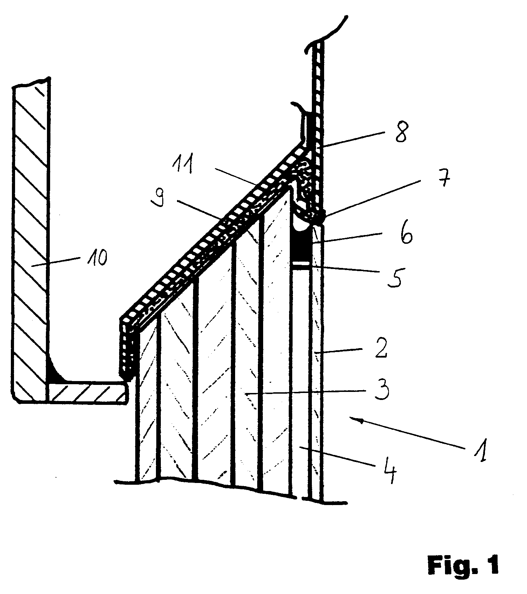

Der Übergang zwischen Ausgleichsscheibe 2 und Außenhaut 8 des Kraftfahrzeuges wird im Ausführungsbeispiel der Fig. 1 durch ein Dichtprofil 7 gebildet, welches zwar im Hinblick auf die gepanzerte Scheibe 1 gegenüber einem serienmäßigen Dichtprofil abgewandelt ist, dessen von außen sichtbarer Bereich jedoch die Originalform hat.

Bei dem in der Fig. 1 dargestellten Ausführungsbeispiel ist ein Teil der Außenhaut 8 Teil einer Fahrzeugtür. Die obere Stirnfläche der Panzerglasscheibe 3 ist von einer Abschlußdichtung 11 und einem Rahmenprofil 9 abgedeckt. Das Rahmenprofil ist an der Außenhaut 8 befestigt.

Zwischen beiden Scheiben befindet sich im wesentlichen im Bereich ihres Umfangs ein umlaufendes Distanzelement 5. Dieses Distanzelement hält beide Scheiben in einem bestimmten Abstand voneinander. Dieser Abstand ist mindestens so groß, daß die maximalen Toleranzen (Fertigungstoleranzen) des Krümmungsverlaufes der Panzerglasscheibe gegenüber der Ausgleichsscheibe ausgeglichen werden. Die Fertigungstoleranzen werden umso größer, je größer die Krümmung der Panzerglasscheibe ist. Während bei früheren Panzerglasscheiben mit relativ geringer Krümmung die Toleranzen z. B. nur in einem Bereich von etwa 2 mm lagen, betragen sie jetzt etwa 3,5 - 4 mm und mehr. Die Ausgleichsscheibe 2 kann im Gegensatz dazu aufgrund ihrer relativ geringen Dicke mit sehr großer Genauigkeit der vorgegebenen Kontur angepaßt werden.

Die Krümmung der Panzerglasscheibe kann folglich im Einzelfall größer oder kleiner sein, als die Krümmung der Ausgleichsscheibe. Denkbar wäre weiterhin, daß aus fertigungstechnischen bzw. wirtschaftlichen Gründen vor allem bei besonders dicken Panzerglasscheiben bewußt eine geringere Krümmung in Kauf genommen oder die Panzerglasscheibe sogar - wie in den Zeichnungen gezeigt - ohne Krümmung ausgeführt wird.

Ist jedoch die Krümmung der Panzerglasscheibe 3 größer als die Krümmung der Ausgleichsscheibe 2, so ist das Distanzelement vorzugsweise so dick, daß sich beide Scheiben nicht berühren. Bei entsprechender Dimensionierung kann auch eine Mindestdistanz beider Scheiben eingehalten werden.

Das Distanzelement besteht im Ausführungsbeispiel aus einer festen, umlaufenden Leiste oder einer Butylschnur, die einen Durchmesser im Bereich zwischen etwa 3 und 8 mm sowie eine mittlere Härte hat und die zunächst mit einer entlang des Umfangs auf die Panzerglasscheibe aufgebrachten Klebstoffschicht auf diese aufgeklebt wird. Anschließend erfolgt in analoger Weise die Befestigung der Ausgleichsscheibe 2 auf der Leiste. Der Abstand zwischen beiden Scheiben kann dabei durch entsprechende Schichtdicke des aufgetragenen Klebstoffs fein eingestellt werden.

Weiterhin ist bei der dargestellten Ausführungsform das Distanzelement 5 gegen die Umgebungsluft mit einer Dichtmasse 6 abgedichtet. Diese Dichtmasse wird zwischen beide Scheiben auf den äußeren Umfang des Distanzelementes aufgebracht. Eine solche Abdichtung ist insbesondere dann sinnvoll, wenn das Distanzelement einen Hohlraum mit einer Öffnung zu dem von beiden Scheiben eingeschlossenen Luftraum aufweist und dieser Luftraum Silica-Gel o. dgl. enthält, welches der eingeschlossenen Luft die Feuchtigkeit entzieht. Die Dichtmasse 6 verhindert dann, daß erneut Feuchtigkeit zwischen die Scheiben eindringt.

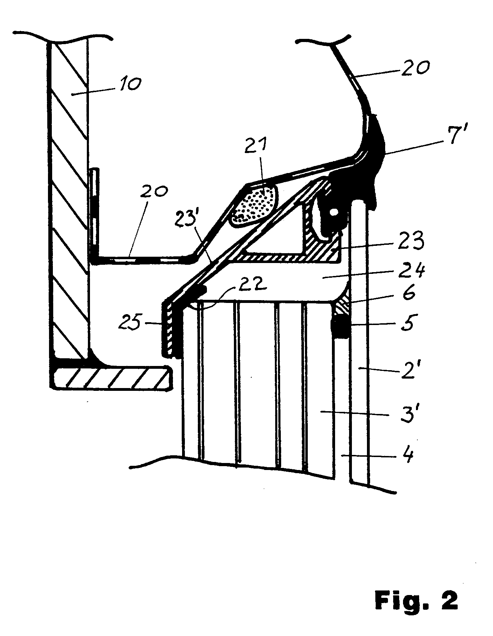

Bei der dargestellten Ausführungsform ist der Umfang der Ausgleichsscheibe 2 kleiner als der größte Umfang der Panzerglasscheibe 3. Insbesondere in dem Fall, in dem man bei einer Tür auf das obere Rahmenprofil 9 verzichtet, kann die Ausgleichsscheibe gemäß Fig. 2 auch so bemessen sein, daß sie einen größeren Umfang aufweist, als die Panzerglasscheibe, d. h. diese also in Draufsicht von außen überragt.

Ferner ist im Ausführungsbeispiel gemäß Fig. 1 die Panzerglasscheibe aus den in der DE-PS 36 39 781 genannten Gründen in Richtung auf den Fahrzeuginnenraum angeschrägt. Zum Schutz des Innenraums ist in dem Bereich, in dem die Panzerglasscheibe eine verringerte Dicke aufweist, eine überlappende gepanzerte Fugenabdeckung 10 vorgesehen. Je nach Konstruktion der Karosserie des Fahrzeuges kann die Abschrägung aber auch ganz oder teilweise entfallen, wie Fig. 2 ausweist.

Das in Fig. 2 dargestellte Ausführungsbeispiel unterscheidet sich - wie bereits angedeutet - in mehreren Punkten von der ersten Ausführungsform. Zunächst zeigt Fig. 2 eine Ausführung, bei der am äußeren Übergang zwischen Tür und Dachrahmen 20 ein Außendichtprofil 7' vorgesehen ist. Dieses Außendichtprofil hat im Ausführungsbeispiel außen und innen seine serienmäßige Gestaltung. Auf der Fahrzeuginnenseite wird es in einem Türrahmenprofil 23 gehalten, welches im Bereich des Außendichtprofils 7' ebenfalls seine serienmäßige Querschnittsabmessung hat.

Das Türrahmenprofil 23 wird ausweislich Fig. 2 partiell von der Ausgleichsscheibe 2' und zu einem kleinen Teil von dem Außendichtprofil 7' abgedeckt; auf der Fahrzeuginnenseite im Bereich des Dachrahmens 20 ist das Türrahmenprofil durch ein Ergänzungsprofil 23' nach innen hin verlängert und läuft in einem nach unten abgewinkelten Flansch 25 aus.

Durch die Verlängerung des Türrahmenprofils um das Ergänzungsprofil 23' und den Flansch 25 wird - von außen betrachtet - hinter der Ausgleichsscheibe 2' Platz geschaffen für eine Panzerglasscheibe 3', deren Außenumfang kleiner ist als der Außenumfang der Ausgleichsscheibe 2'. Die beiden Bestandteile der Panzerglasscheibe sind analog dem ersten Ausführungsbeispiel durch eine Butylschnur 5 in Abstand voneinander gehalten und miteinander verklebt sowie mittels einer Dichtmasse 6 gegenüber der Außenluft versiegelt. Oberhalb der Panzerglasscheibe 3' ist bis zum Beginn des Türrahmenprofils 23 ein Hohlraum 24 in Fig. 2 erkennbar. Seine Größe in der Zeichnung ist nicht maßstäblich; die Größe hängt vielmehr vom zu panzernden Fahrzeug und dessen Konstruktion ebenso ab wie von der Gestaltung des Ergänzungsprofils 23 und auch vom Vorhandensein oder Nichtvorhandensein des Flansches 25.

Im Ausführungsbeispiel gemäß Fig. 2 ist die Panzerglasscheibe ungekrümmt ausgeführt und hat keine abgeschrägten Bereiche entlang ihres Außenumfangs. Sie ist jedoch mit einer kleinen Anschrägung nach Art einer Fase 22 versehen. Diese dient primär dem Kantenschutz, wenn die gepanzerte Scheibe versenkbar ausgeführt ist. In einem solchen Fall dient die Fase 22 nicht zur Verhinderung eines Absplitterns von Kantenbereichen der Panzerglasscheibe 3', sondern auch dem Schutz von Insassen, falls die Scheibe nur partiell versenkt ist.

Die Ausgleichsscheibe 2' ist in Fig. 2 ebenfalls als eine ungekrümmte Scheibe dargestellt. Dies ist aber nur aus Gründen der vereinfachten Darstellung geschehen, weil die Ausgleichsscheibe 2' ebenso wie die Ausgleichsscheibe 2 zumindest im Bereich der Personenkraftfahrzeuge heute üblicherweise eine zum Teil sehr komplexe Krümmung aufweist.

Ergänzend sei noch darauf hingewiesen, daß sich zwischen Türrahmenprofil 23 und dem Dachrahmen des Kraftfahrzeuges die herkömmliche Innendichtung 21 befindet, die im Ausführungsbeispiel ihre serienmäßige Gestaltung und Anordnung hat.

## Patentansprüche

1. Kraftfahrzeug mit gepanzerter Scheibe (1), die gegenüber einer äußeren Umfangsfläche des Kraftfahrzeuges in Richtung auf seinen Innenraum zurückgesetzt und mit dem Kraftfahrzeug verbunden ist, dadurch gekennzeichnet, daß sie zusätzlich zu einer Panzerglasscheibe (3, 3') eine nicht oder weniger gepanzerte und auf der Fahrzeugaußenseite vor die Panzerglasscheibe gesetzte Ausgleichsscheibe (2, 2'), die im wesentlichen flächenbündig in die Außenhaut (8, 20) des Kraftfahrzeuges oder dessen Tür eingelassen ist und einer von der Kraftfahrzeugform vorgegebenen Kontur folgt und Distanzelemente (5) zum Ausgleich von Fertigungstoleranzen der Panzerglasscheibe (3, 3') und zur Befestigung der Ausgleichsscheibe (2, 2') an der diese tragenden Panzerglasscheibe aufweist.

2. Kraftfahrzeug mit gepanzerter Scheibe nach Anspruch 1,
dadurch gekennzeichnet, daß die Distanzelemente (5) aus einer zwischen den Scheiben im wesentlichen an ihrem Umfang ganz oder teilweise umlaufenden Leiste und jeweils einer Klebstoffschicht zwischen Scheiben und Leiste gebildet sind.

3. Kraftfahrzeug mit gepanzerter Scheibe nach Anspruch 2,
dadurch gekennzeichnet, daß der Abstand zwischen beiden Scheiben (2, 2', 3, 3') durch die Schichtstärke des Klebstoffs fein eingestellt ist.

4. Kraftfahrzeug mit gepanzerter Scheibe nach Anspruch 2 oder 3,
dadurch gekennzeichnet, daß die Leiste in einem Hohlraum Silica-Gel o. dgl. enthält und eine Öffnung zumindest zu dem von beiden Scheiben eingeschlossenen Luftzwischenraum (4) aufweist und daß das Distanzelement (5) gegen die Umgebungsluft mit einer Dichtmasse (6) abgedichtet ist.

5. Kraftfahrzeug mit gepanzerter Scheibe nach mindestens einem der vorhergehenden Ansprüche,
dadurch gekennzeichnet, daß die Leiste von einer Butylschnur gebildet ist.

6. Kraftfahrzeug mit gepanzerter Scheibe nach Anspruch 5 dadurch gekennzeichnet, daß die Butylschnur rund mit einem Durchmesser zwischen 3 und 8 mm ist und vorzugsweise eine mittlere Härte hat.

7. Kraftfahrzeug mit gepanzerter Scheibe nach mindestens einem der vorhergehenden Ansprüche,
dadurch gekennzeichnet, daß die Ausgleichsscheibe (2, 2') eine Scheibe aus Einscheiben-Sicherheitsglas ist.

8. Kraftfahrzeug mit gepanzerter Scheibe nach mindestens einem der vorhergehenden Ansprüche,
dadurch gekennzeichnet, daß das Maß des Umfangs der Ausgleichsscheibe (2, 2') vom Umfangsmaß der Panzerglasscheibe (3) abweicht.

9. Kraftfahrzeug mit gepanzerter Scheibe mindestens nach Anspruch 8,
dadurch gekennzeichnet, daß der Umfang der Ausgleichsscheibe (2') größer ist als der größte Umfang der Panzerglasscheibe (3).

10. Kraftfahrzeug mit gepanzerter Scheibe mindestens nach Anspruch 9,
dadurch gekennzeichnet, daß die Panzerglasscheibe (3') eine geringere Krümmung hat als die Ausgleichsscheibe (2').

11. Kraftfahrzeug mit gepanzerter Scheibe nach mindestens einem der Ansprüche 1 bis 10,
dadurch gekennzeichnet, daß das Außendichtprofil (7') der Türen des Kraftfahrzeuges mindestens auf dessen Außenseite seine serienmäßigen Abmessungen aufweist.

12. Kraftfahrzeug mit gepanzerter Scheibe nach mindestens einem der Ansprüche 1 bis 11,
dadurch gekennzeichnet, daß das Türrahmenprofil (23) mindestens im Bereich des Außendichtprofils (7') seine serienmäßigen Abmessungen aufweist.

## Claims

1. Vehicle with bullet-proof window pane (1) set back towards the interior of the vehicle against its exterior surface and bonded to the vehicle,
characterised by the fact that it presents, next to a bullet-proof pane (3, 3'), a supplementary compensating pane (2, 2'), which is not bullet-proof, or not quite as resistant as the first one, set before the bullet-proof pane on the outside of the vehicle, practically flush with the exterior surface of the vehicle (8, 20) or of the vehicle door, following the contour of the vehicle, with spacers (5) to compensate for manufacturing tolerances of the bullet-proof pane (3, 3') and to fasten the compensating pane (2, 2') to the bullet-proof pane which carries it.

2. Vehicle with bullet-proof window pane according to claim no. 1,
characterised by the fact that the spacers (5) consist of a strip placed between the panes, running essentially along the perimeter of the pane, with or without interruptions, and of a coat of bonding glue between the panes and the strip.

3. Vehicle with bullet-proof window pane according to claim no.2,
characterised by the fact that the fine adjustment of the distance between the panes (2, 2', 3, 3') is assured over the thickness of the coat of bonding glue.

4. Vehicle with bullet-proof window pane according to claim no. 2 or 3,
characterised by the fact that the strip contains blue gel or a similar substance in a cavity, and that it has an orifice opening at least into the air volume enclosed between the panes (4), and that the spacer (5) is tightly insulated against exterior air by a sealant (6).

5. Vehicle with bullet-proof window pane according at least to one of the previous claims,
characterised by the fact that the strip consists of a butyl cord.

6. Vehicle with bullet-proof window pane according to claim no. 5,
characterised by the fact that the butyl cord is round, with a diameter between 3 and 8 mm, and is preferably of medium hardness.

7. Vehicle with bullet-proof window pane according at least to one of the previous claims,
characterise by the fact that the compensating pane (2, 2') is made of single layer safety glass.

8. Vehicle with bullet-proof window pane according at least to one of the previous claims,
characterised by the fact that the length of the perimeter of the compensating pane (2, 2') differs from the length of the perimeter of the bullet-proof pane (3).

9. Vehicle with bullet-proof window pane according at least to claim no. 8,
characterised by the fact that the perimeter of the compensating pane (2') is longer than the longest perimeter of the bullet-proof pane (3).

10. Vehicle with bullet-proof window pane according at least to claim no. 9,
characterised by the fact that the curvature of bullet-proof pane (3') is smaller than that of compensating pane (2').

11. Vehicle with bullet-proof window pane according at least to one of claims 1 till 10,
characterised by the fact that the exterior sealing profile (7') of the doors of the vehicle has its standard dimensions at least on the outside of the vehicle.

12. Vehicle with bullet-proof window pane according at least to one of claims 1 till 11,
characterised by the fact that the door frame profile (23) has its standard dimensions, at least in the area of the exterior sealing profile (7').

## Revendications

1. Véhicule ayant des vitres blindées (1) renfoncées vers l'intérieur du véhicule par rapport à la surface extérieure, et solidaires du véhicule,
caractérisées en ce qu'elles présentent, à côté d'une vitre blindée (3, 3'), un vitre de compensation supplémentaire (2, 2'), non blindée, ou du moins pas aussi solide que la première vitre, posée devant la vitre blindée à l'extérieur du véhicule et pratiquement à ras de la surface extérieure (8, 20) de ce dernier ou de la portière du véhicule, suivant le contour du véhicule, avec des pièces d'écartement (5) servant à compenser les tolérances de fabrication de la vitre blindée (3, 3') et à fixer la vitre de compensation (2, 2') à la vitre blindée qui la porte.

2. Véhicule ayant des vitres blindées selon la revendication 1,
caractérisées en ce que les pièces d'écartement (5) sont constituées d'une bande placée entre les vitres, suivant essentiellement le contour de la vitre, avec ou sans interruptions, et d'une couche de colle entre les vitres et la bande.

3. Véhicule ayant des vitres blindées selon la revendication 2,
caractérisées en ce que le réglage de distance fin entre les vitres (2, 2', 3, 3') est assuré par l'épaisseur de la couche de colle.

4. Véhicule ayant des vitres blindées selon la revendication 2 ou 3,
caractérisées en ce que la bande contient du gel de silice ou une substance semblable dans une cavité, et qu'elle présente un orifice débouchant au moins dans le volume d'air enfermé entre les vitres (4), et en ce que la pièce d'écartement (5) est séparée de manière étanche par rapport à l'atmosphère au moyen d'une masse d'étanchéité (6).

5. Véhicule ayant des vitres blindées selon au moins une des revendications antérieures,
caractérisées en ce que la bande soit constituée par un cordon de butyle.

6. Véhicule ayant des vitres blindées selon la revendication 5,
caractérisées en ce que le cordon de butyle est de section ronde, présentant un diamètre entre 3 et 8 mm et étant de préférence de dureté moyenne.

7. Véhicule ayant des vitres blindées selon au moins une des revendications antérieures,
caractérisées en ce que la vitre de compensation (2, 2') consiste en verre de sécurité d'une seule couche.

8. Véhicule ayant des vitres blindées selon au moins une des revendications antérieures,
caractérisées en ce que le périmètre de la vitre de compensation (2, 2') diffère par rapport au périmètre de la vitre blindée (3).

9. Véhicule ayant des vitres blindées selon au moins la revendication 8,
caractérisées en ce que le périmètre de la vitre de compensation (2') est plus long que le périmètre le plus long de la vitre blindée (3).

10. Véhicule ayant des vitres blindées selon au moins la revendication 9,
caractérisées en ce que le rayon de courbure de la vitre blindée (3') est plus petit que celui de la vitre de compensation (2').

11. Véhicule ayant des vitres blindées selon au moins une des revendications 1 à 10,
caractérisées en ce que le profil d'étanchéité extérieur (7') des portières du véhicule présente ses dimensions standard, au moins sur l'extérieur du véhicule.

12. Véhicule ayant des vitres blindées selon au moins une des revendications 1 à 11,
caractérisées en ce que le profil du cadre de la portière (23) présente ses dimensions standard, au moins dans la zone du profil d'étanchéité extérieur (7').
